(19) Europäisches Patentamt
European Patent Office
Office européen des brevets

(11) Publication number : **0 581 520 A1**

# (12) EUROPEAN PATENT APPLICATION

(21) Application number : **93305757.2**

(22) Date of filing : **22.07.93**

(51) Int. Cl.[5] : **C08L 71/12,** C08K 5/54, C08G 77/38

(30) Priority : **28.07.92 JP 220610/92**

(43) Date of publication of application : **02.02.94 Bulletin 94/05**

(84) Designated Contracting States : **DE ES FR GB IT NL**

(71) Applicant : **GE PLASTICS JAPAN LIMITED
7-2, 3-Chome, Nihonbashi-Honcho
Chuo-Ku, Tokyo (JP)**

(72) Inventor : **Inoue, Kazushige
3554-12 Kumakura-cho
Moka City, Tochigi Prefecture (JP)**

(74) Representative : **Pratt, Richard Wilson et al
London Patent Operation G.E. Technical Services Co. Inc. Essex House 12/13 Essex Street
London WC2R 3AA (GB)**

## (54) Polyphenylene ether resin compositions with improved light resistance.

(57) Light-resistant polyphenylene ether resin compositions are provided, which compositions comprise :

(A) 100 parts by weight of :

(a1) polyphenylene ether resin, or

(a2) polyphenylene ether resin and styrene resin combined ; and

(B) 0.01-5 parts by weight of a compound having a specific structure in which a molecule that functions as a hindered amine light stabilizer and a silicon compound are linked by a carboxylic acid ester group. This resin composition has an excellent light resistance, as well as a good impact resistance and a good heat resistance.

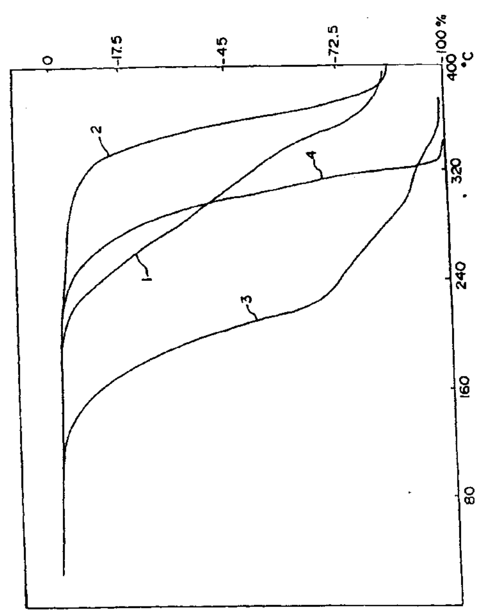


Fig. 1

EP 0 581 520 A1

This invention relates to polyphenylene ether resin compositions with improved light resistance.

In addition to their outstanding heat resistance, polyphenylene ether resins (PPE) also have excellent mechanical strength, electrical properties, water resistance, flame retardance and other properties; hence, they have a variety of applications as resin materials for molding. However, polyphenylene ether resins have an inferior light resistance; when exposed to light for a long period of time, the surface discolors, thereby ruining the color tone. Various stabilizers have hitherto been added to improve upon these drawbacks.

For example, methods that use the additives cited in Japanese Published Unexamined Patent Application [Kokai] Nos. 59-8752 and 59-8751 (both 1984) may be cited. However, because these stabilizers decompose and dissipate in the process of melt kneading for production of the composition, the light resistance is not effectively improved. Moreover, when a large amount of stabilizers is used, this invites a decline in the heat resistance and the mechanical properties.

In methods where functional groups having a stabilizing action are directly introduced onto PPE, such as is disclosed in Kokai No. 62-215,655 (1987), the types and amounts of the functional groups that can be introduced are limited, in addition to which the production steps are complicated. Hence, such methods are not satisfactory in practice.

The inventors discovered that, by using compounds having a structure in which a molecule that functions as a hindered amine light stabilizer is bonded with a silicon compound, the light resistance of PPE can be improved without incurring the problems described above.

In other words, this invention is a polyphenylene ether resin composition having improved light resistance, comprising:

(A) 100 parts by weight of:

(a1) polyphenylene ether resin, or

(a2) polyphenylene ether resin and styrene resin combined; and

(B) 0.01-5 parts by weight of a compound having the formula

$$A_nB_{n'}$$

(where A is a divalent group having the formula

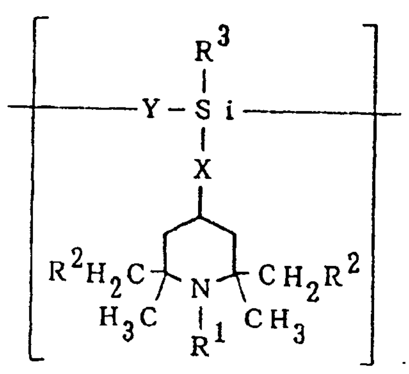
;

B is a divalent group having the formula

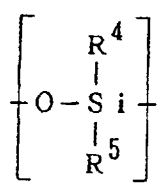
;

the n $R^1$ groups and the 2n $R^2$ groups are each independently hydrogens or $C_{1-12}$ alkyls or aryls; R, R', the n $R^3$ groups and the n' $R^4$ and $R^5$ groups are independently hydrogens, $C_{1-8}$ alkyls, aryls, or aralkyls with an alkyl group bearing 1-8 carbons, or two from among R, R' and $R^3$-$R^5$ represent one -O- and form a siloxane ring; X is a group having the formula

$$-C_mH_{2m}-C(=O)O-;$$

m is an integer from 1-3; Y is a single bond only when linked with R, and is an oxygen atom in other cases; n is an integer equal to or greater than 1; n' is an integer equal to or greater than 0; and A and B may each

form blocks or may be randomly linked).

The term polyphenylene ether as used in this invention refers generically to those polymers, for example, having the general formula

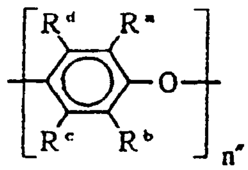

(where $R^a$, $R^b$, $R^c$ and $R^d$ represent monovalent substituents selected from among hydrogens, halogens, alkyl groups, alkoxy groups, haloalkyl groups having at least two carbon atoms between the halogen atoms and the phenyl ring, and haloalkoxy groups containing no tertiary $\alpha$-carbons; and n" is an integer representing the degree of polymerization). This may be a homopolymer of one polymer having the above formula, or it may be a copolymer that combines two or more of these polymers. Preferable examples that may be cited are polymers in which $R^a$ and $R^b$ are alkyls having 1-4 carbons, and $R^c$ and $R^d$ are hydrogens, such as poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether and poly(2-ethyl-6-propyl-1,4-phenylene) ether. Examples of PPE copolymers that may be cited include copolymers containing some alkyl tri-substituted phenols such as 2,3,6-trimethylphenol among the above polyphenylene ether repeating units. A copolymer arrived at by grafting a styrene compound to these PPE polymers may also be used. Examples of styrene compound-grafted polyphenylene ethers include copolymers obtained by the graft polymerization of a styrene compound such as styrene, $\alpha$-methylstyrene, vinyltoluene and chlorostyrene onto the above-described PPE polymers.

The styrene resins (PS) used in this invention must contain within the polymer at least 25 wt% of repeating structural units that are derived from vinyl aromatic compounds and have the formula

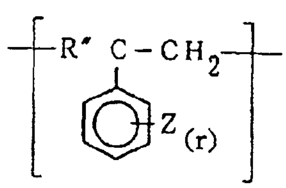

where R" is hydrogen or an alkyl containing 14 carbons; Z is a substituent that is a halogen or an alkyl with 1-4 carbons; and r is an integer from 0 to 5. Examples that may be cited of these styrene polymers include homopolymers of styrene or its derivatives; mixtures of natural or synthetic elastomer substances such as polybutadiene, polyisoprene, butyl rubber, EPDM, ethylene-propylene copolymer, natural rubber and epichlorohydrin, or styrene polymers modified therewith; and also styrene-containing copolymers such as styrene-acrylonitrile copolymers (SAN), styrene-butadiene copolymers, styrene-maleic anhydride copolymers and styrene-acrylonitrile-butadiene copolymers (ABS). The styrene resins preferable for this invention are homopolystyrene and rubber-reinforced polystyrene.

The preferable weight ratio between PPE and PS in (A) varies depending on the monomer components that form the various resins (e.g., the monomer composition in cases where the resin is a copolymer), although it is generally appropriate for the weight ratio between PPE and PS to be 100:0 to 10:90. A weight ratio between PPE and PS of 90:10 to 20:80 is even more appropriate. The specification mentions PPE and PS combined as component (a2) in (A). But this is only to clarify the weight ratio between components (A) and (B); it does not mean that PPE and PS are always mixed prior to the mixture with component (B) indicated below.

The compound represented by the equation

$$A_nB_{n'}$$

where A is a divalent group having the formula

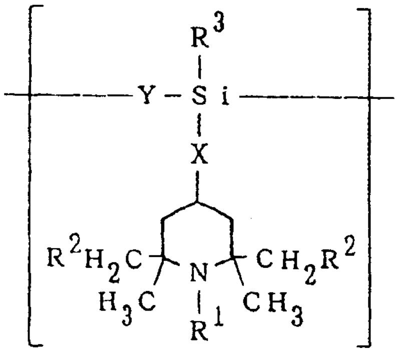

;

B is a divalent group having the formula

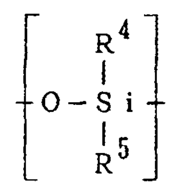

;

the n $R^1$ groups and the 2n $R^2$ groups are each independently hydrogens or $C_{1-12}$ alkyls or aryls; R, R', the n $R^3$ groups and the n' $R^4$ and $R^5$ groups are independently hydrogens, $C_{1-8}$ alkyls, aryls, or aralkyls with an alkyl group bearing 1-8 carbons, or two from among R, R' and $R^3$-$R^5$ represent one -O- and form a siloxane ring; X is a group having the formula

$$-C_mH_{2m}-C(=O)O-;$$

m is an integer from 1-3; Y is a single bond only when linked with R, and is an oxygen atom in other cases; n is an integer equal to or greater than 1; n' is an integer equal to or greater than 0; and A and B may each form blocks or may be randomly linked

in component (B) is a compound that is known in and of itself. In this invention, it is preferable that a compound having a structure in which the alkylene portion of X is bonded to the silicon atom be used. The alkylene portion of X may have a straight chain or may be branched. It is preferable that $R^1$ and $R^2$ be hydrogens or lower alkyls; and it is especially preferable that $R^1$ be a methyl group and that $R^2$ be a hydrogen atom. R, R', and $R^3$-$R^5$ are hydrogens, lower alkyls and especially methyls; moreover, it is preferable that two of these represent one -O- and form a siloxane ring. Here, "two from among R, R' and $R^3$-$R^5$ represent one -O- and form a siloxane ring" means that R and R' together form -O- and give rise to a ring-like siloxane portion within the molecule. Also, m is preferably 2 or 3, and especially 3.

The compound in component (B) can be fabricated by a reaction between an N-substituted or N-unsubstituted 2,2,6,6-tetrasubstituted piperidinyl (meth)acrylate such as N-methyl-2,2,6,6-tetramethylpiperidinyl methacrylate with an equivalent weight of hydrosilane or hydrosiloxane. There is no particular limit on the hydrosilane or hydrosiloxane used here, it being possible to use various known hydrosilane or hydrosiloxanes. Examples that may be cited include heptamethylcyclotetrasiloxane and methyl hydrogen polysiloxanoyl, although the possibilities are not limited to these alone. The reaction can be carried out using known hydrosilylating catalysts such as cobalt, rhodium, nickel, palladium and platinum compounds. There is no particular limit on the reaction conditions, although it is preferable to carry out the reaction at a low temperature and especially at a temperature of -60°C or less, and in the presence of a catalyst, and especially a platinum catalyst. The reaction can be carried out in a solvent such as toluene or benzene.

Component (B) is included in an amount of 0.01-5 parts by weight, and preferably 0.1-3 parts by weight, per 100 parts by weight of component (A). When the amount of component (B) is less than 0.01 part by weight, the light resistance of the resulting resin composition is inadequate; when this exceeds 5 parts by weight, the heat resistance and mechanical properties of the composition decrease.

As demonstrated later in Reference Example 3, the compound serving as Component (B) differs from conventional hindered amine light stabilizers in that the heat stability is good and the volatility is low. Thus, this has the advantage that decomposition and dissipation of the stabilizer do not arise in the melt kneading step. This is probably one reason why Component (B) displays such a striking effect in the present invention.

The compositions according to this invention may include, as an optional ingredient for enhancing the impact strength, a rubbery substance in an amount of up to, for example, 80 parts by weight per 100 parts by weight of Component (A). Rubbery substances include natural and synthetic polymer materials that are elastic bodies at room temperature. Specific examples that may be cited include natural rubbers, butadiene polymers, styrene-isoprene copolymers, butadiene-styrene copolymers (including all random copolymers, block copolymers, graft copolymers, etc.) isoprene polymers, chlorobutadiene polymers, butadiene-acrylonitrile copolymers, isobutylene polymers, isobutylene-butadiene copolymers, isobutylene-isoprene copolymers, acrylate polymers, ethylene-propylene copolymers, ethylene-propylene-diene copolymers, Thiokol rubbers, polysulfide rubbers, polyurethane rubbers, polyether rubbers (e.g., polypropylene oxide) and epichlorohydrin rubbers. These rubbery substances may be prepared by any polymerization process (e.g., emulsion polymerization, solution polymerization) and with any catalyst (e.g., peroxides, trialkyl aluminum, halogenated lithium and nickel catalysts). In addition, use can also be made of rubbery substances having various degrees of crosslinking, rubbery substances having microstructures in various ratios (e.g., *cis* structures, *trans* structures, vinyl groups), and rubbery substances having various average rubber particle sizes. Various types of copolymers such as random copolymers, block copolymers or graft copolymers can be used as the rubbery substances in this invention. In addition, when these rubbery substances are prepared, copolymerization with monomers such as other olefins, dienes, aromatic vinyl compounds, acrylic acid, acrylates and methacrylates can be carried out. Any means such as random copolymerization, block copolymerization or graft copolymerization may be used as these copolymerization methods. Specific examples of these monomers that may be cited include ethylene, propylene, styrene, chlorostyrene, $\alpha$-methylstyrene, butadiene, isobutylene, chlorobutadiene, butene, isobutylene, methyl acrylate, acrylic acid, ethyl acrylate, butyl acrylate, methyl methacrylate and acrylonitrile. In addition, partially modified rubbery substances can be used. Examples that may be cited include hydroxy- or carboxy-terminal modified polybutadienes, partially hydrogenated styrene-butadiene block copolymers, and partially hydrogenated styrene-isoprene block copolymers.

These may be mixed with other resins such as polyamides and polyesters, and in particular rendered into resin alloys.

One or more conventional additives, including stabilizers such as antioxidants and heat stabilizers, ultraviolet light absorbers, lubricants, mold release agents, colorants such as dyes and pigments, flame retardants, flame-retarding assistants and antistatic agents may be added to the compositions obtained according to this invention provided this is done within a range that does not compromise the object of the invention. Reinforcing agents such as glass fibers, carbon fibers, boron fibers, silicon carbide fibers, asbestos fibers and metal fibers, and fillers such as clay, mica, silica, graphite, glass beads, alumina and calcium carbonate may also be added.

A melt-kneading process is desirable as the method for preparing the compositions according to this invention. Although the use of a small amount of solvent is possible, it is generally not necessary. Examples of devices that can be cited in particular include extruders, Banbury mixers, rollers and kneaders; these can be operated in a batch-wise or continuous manner. There is no particular restriction on the ingredient mixing sequence. The resin compositions according to this invention can be prepared by a variety of methods, such as a method whereby the PPE, PS, Component (B) and optional ingredients such as the rubbery substance are mixed at the same time; a method whereby the PPE and the PS are mixed, after which the resulting mixture is mixed with Component (B) and the optional ingredients; and a methods whereby the PPE is pre-mixed with part of Component (B) and the optional ingredients, the PS is pre-mixed with the remainder of Component (B) and the optional ingredients. and both of these mixtures are then mixed together.

The electrically conductive [sic] resin compositions of this invention not only have an excellent light resistance, they also have a good heat resistance and good mechanical properties.

The present invention shall now be described more concretely by means of examples, although it shall be understood that this invention is in no way restricted by these examples.

## Examples

### Reference Example 1 of Invention

Heptamethyl cyclotetrasiloxane and an equivalent weight of N-methyl-2,2,6,6-tetramethylpiperidinyl methacrylate were reacted in the presence of a platinum catalyst and in toluene at -80°C. After the end of the reaction, the toluene was distilled off, thereby giving a liquid (referred to hereinafter as Liquid 1).

### Reference Example 2 of Invention

Aside from using a methyl hydrogen polysiloxanoyl (Toshiba Silicone KK; TSF 483; viscosity at 25°C, 60

cst) having one hydrogen atom per two silicon atoms in place of the heptamethyl cyclotetrasiloxane, the same procedure was carried out as in Reference Example 1, thereby giving a liquid (hereinafter referred to as Liquid 2).

Examples 1 and 2, Comparative Examples 1 and 2

Poly(2,6-dimethyl-1,4-phenylene ether) (General Electric Co.; intrinsic viscosity measured in chloroform at 25°C, 0.48 dl/g), impact-resistant PS (HIPS; "Diarex"* 870-ST; Mitsui Toatsu Chemicals), Liquid 1 or 2 obtained in the reference examples above or, for the sake of comparison, "Sanol" LS-770 (Sankyo KK), and also titanium dioxide powder were used in the amounts indicated in Table 1 (parts by weight). The mixture was kneaded and extruded at 280°C using a twin-screw extruder, and pellets thereby fabricated. "Sanol" LS-770 (hereinafter, LS-770) has the following structure

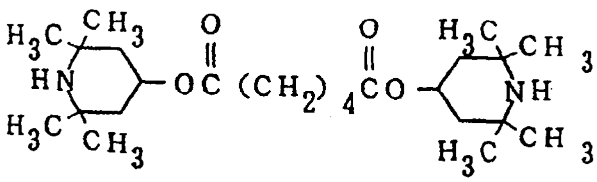

Various kinds of test pieces were formed by injection molding the pellets thus obtained. The following properties were evaluated.

Light Resistance: Using a fadeometer (Atlas), 100-hour and 200-hour acceleration tests were carried out through plate glass having a thickness of 3 mm, following which ΔYI was measured using a Hitachi CA-35 spectrometer. A higher numerical value indicates a larger degree of yellowing.

Izod Impact Strength (notched, abbreviated as "Izod" in table): Measured in general accordance with ASTM D-256.

Heat Distortion Temperature: Measured in general accordance with ASTM D-648. Load, 18.6 kg/cm$^2$; units, °C.

The results are given in Table 1.

**Table 1**

| | Examples of Invention | | Comparative Examples | |
|---|---|---|---|---|
| | 1 | 2 | 1 | 2 |
| **Composition** | | | | |
| PPE | 50 | 50 | 50 | 50 |
| HIPS | 50 | 50 | 50 | 50 |
| Liquid 1 | 0.5 | -- | -- | -- |
| Liquid 2 | -- | 0.5 | -- | -- |
| LS-770 | -- | -- | 0.5 | -- |
| $TiO_2$ | 5 | 5 | 5 | 5 |
| **Properties of moldings** | | | | |
| Resistance to discoloration A | 5.0 | 4.0 | 7.6 | 9.9 |
| by light* B | 23.3 | 21.2 | 25.4 | 31.1 |
| Izod | 13 | 16 | 16 | 12 |
| Heat distortion temperature | 130 | 129 | 127 | 131 |

* A: ΔYI after 100-hour acceleration test
B: ΔYI after 200-hour acceleration test

From Table 1, it is apparent that the resin compositions of this invention have an excellent light resistance, and exhibit a good impact resistance and a good heat resistance.

Reference Example

Thermogravimetric analysis was carried out at a temperature rise rate of 10°C/min for each of the following four hindered amine compounds: Liquid 1, Liquid 2, the N-methyl-2,2,6,6-tetramethylpiperidinyl methacrylate

used as the starting material, the commercially available hindered amine-type light stabilizer LS-770. Those results are shown in Fig. 1. In Fig. 1, Curve 1 represents the results for Liquid 1, Curve 2 represents the results for Liquid 2, Curve 3 represents the results for N-methyl-2,2,6,6-tetramethylpiperidinyl methacrylate, and Curve 4 represents the results for LS-770. As is shown in Fig. 1, the compound serving as Component (B) in the present invention has a good heat stability. LS-770, as demonstrated in Comparative Example 1, imparts an inferior light resistance.

Brief Description of the Diagram

Figure 1 shows the loss on heating results for each of four hindered amine compounds.

Description of the Symbols

1: Curve showing the loss on heating for Liquid 1 obtained in Reference Example 1 of the Invention.
2: Curve showing the loss on heating for Liquid 2 obtained in Reference Example 2 of the Invention.
3: Curve showing the loss on heating for N-methyl-2,2,6,6-tetramethyl-piperidinyl methacrylate.
4: Curve showing the loss on heating for LS-770.

## Claims

**(1)** A polyphenylene ether resin composition having improved light resistance, comprising:
(A) 100 parts by weight of:
(a1) polyphenylene ether resin, or
(a2) polyphenylene ether resin and styrene resin combined; and
(B) 0.01-5 parts by weight of a compound having the formula

$$R\text{-}A_nB_{n'}\text{-}R'$$

where A is a divalent group having the formula

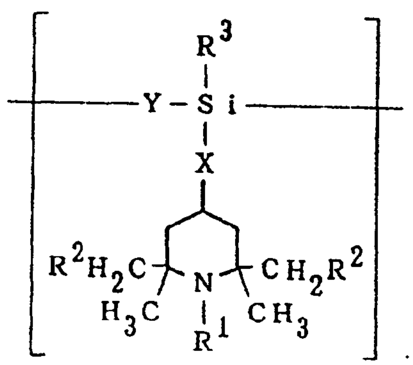

;

B is a divalent group having the formula

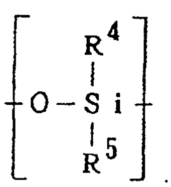

;

$R^1$ and $R^2$ are each independently hydrogen or $C_{1-12}$ alkyl or aryl; R, R', $R^3$, $R^4$ and $R^5$ are independently hydrogen, $C_{1-8}$ alkyl, aryl, or aralkyl with an alkyl group bearing 1-8 carbons, or two from among R, R' and $R^3$-$R^5$ represent one -O- and form a siloxane ring; X is a group having the formula

$$-C_mH_{2m}-C(=O)O-;$$

m is an integer from 1-3; Y is a single bond only when linked with R, and is an oxygen atom in other cases;

n is an integer equal to or greater than 1; n' is an integer equal to or greater than 0; and A and B may each form blocks or may be randomly linked.

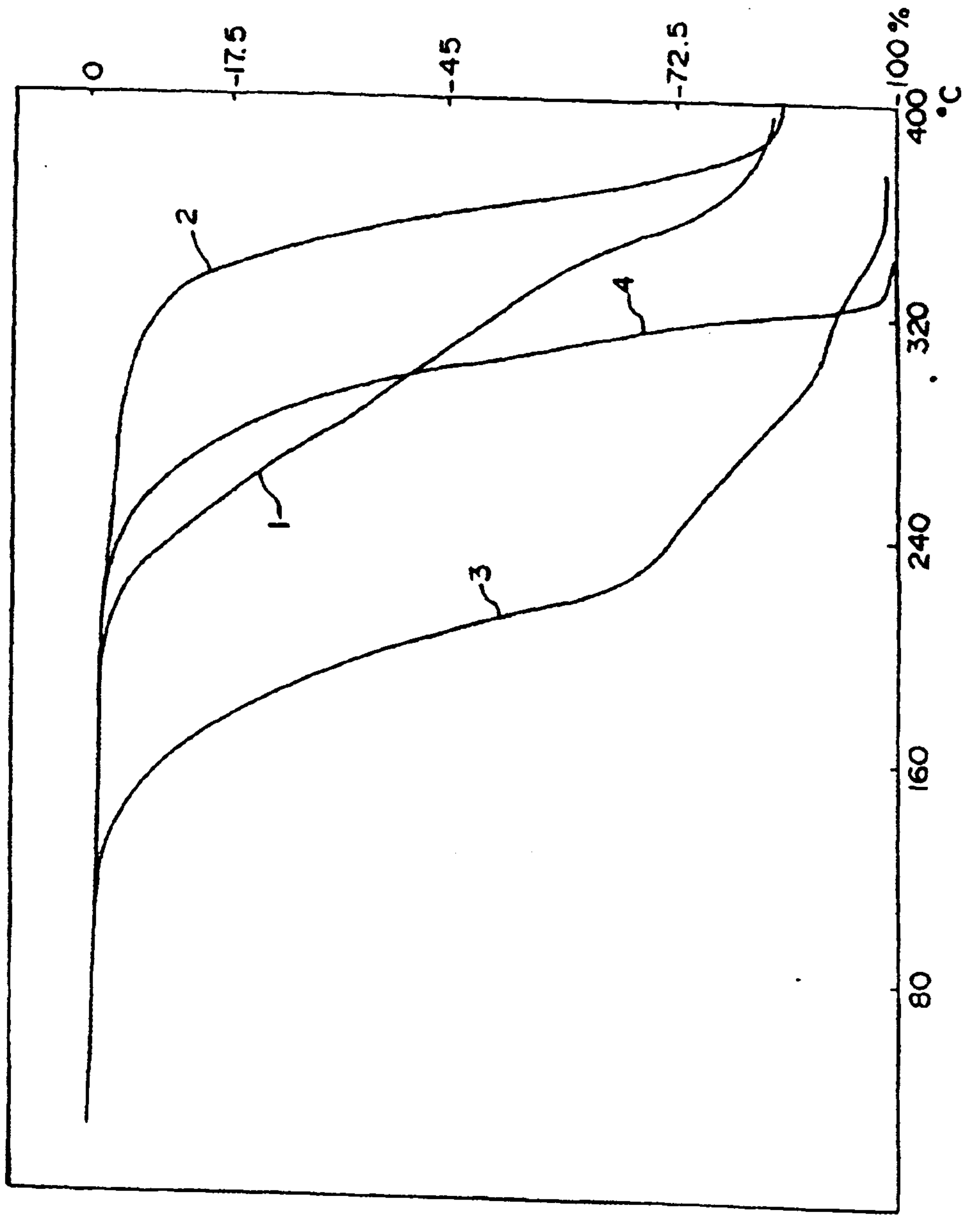


Fig. 1

European Patent Office

# EUROPEAN SEARCH REPORT

Application Number

EP 93 30 5757

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 491 659 (CIBA-GEIGY)<br>* claim 1 *<br>* page 4, line 46 - line 55 *<br>* page 11, line 17 - line 18 * | 1 | C08L71/12<br>C08K5/54<br>C08G77/38 |
| A | EP-A-0 358 190 (UNION CARBIDE CORP.)<br>* claim 1 *<br>* page 8, line 5 - line 10 * | 1 | |
| A | DATABASE WPI<br>Derwent Publications Ltd., London, GB;<br>AN 89-155134(21)<br>& JP-A-1 096 259 (ADEKA-ARGUS CHEM KK) 14 April 1989<br>* abstract * | 1 | |
| A | US-A-4 250 268 (RODY J. ET AL)<br>* claims 1,10,13 *<br>* column 63, line 47 * | 1 | |

TECHNICAL FIELDS SEARCHED (Int. Cl.5 )

C08L
C08K
C08G

The present search report has been drawn up for all claims

| Place of search | Date of completion of the search | Examiner |
|---|---|---|
| THE HAGUE | 25 OCTOBER 1993 | O'SULLIVAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)